# EUROPEAN PATENT APPLICATION

(11) **EP 4 848 557 A1**
(43) Date of publication of application: **02.12.2026**
(21) Application number: 26176811.3
(22) Date of filing: 06.05.2026
(51) Int. Cl.: H02M 5/293, B60L 55/00

(54) **SOLID STATE NEUTRAL FORMING TRANSFORMER**

(30) Priority: 27.05.2025 US 202519219685
(71) Applicant: Schneider Electric USA, Inc., Boston, MA 02108 (US)
(72) Inventor: BHATTACHARYA, Subhadeep, Richmond V6V 2J1 (CA); JEDARI ZARE ZADEH, Mahdi, Richmond V6V 2J1 (CA)
(74) Representative: Openshaw & Co.

(57) **Abstract**

A neutral forming transformer comprises a power electronics AC-to-AC converter circuit (400). The circuit (400) comprises a pair of half bridge configurations connected to each other using an inductor to create a controlled neutral point. Each half bridge configuration defines an arm and a leg and at least one solid state bidirectional switching device (402) is located in the arm and in the leg of each half bridge configuration. A first electrical line may be electrically connected to the arm of one of the half bridge configurations and a second electrical line may be electrically connected to the arm of another one of the half bridge configurations. A neutral line may be electrically connected to the leg of each of the half bridge configurations.

## Description

### BACKGROUND

A neutral forming transformer (NFT) may be used to create a neutral connection in an electrical system, particularly in a delta-connected system where a neutral is not inherently available. The neutral provides a return path for fault currents, ensuring safety and stability during ground faults. The neutral connection also acts as a reference point for the electrical system, carrying the imbalance of current and providing a return path for single-phase loads. In a conventional installation, the NFT is packaged with the main or backup electrical panel. Normally, the grid provides the neutral. While NFTs are known, conventional NFTs are large, bulky, and very expensive to install.

Typical residential power configurations use multiple inverters for different applications, such as solar power generation, energy storage systems (ESS), and electric vehicle (EV) charging. A neutral terminal of the NFT, which is coupled to the inverter output, forms a neutral voltage. This functionality is crucial for maintaining system balance and safety in electrical networks. While the NFT can be used to isolate the home from the grid, the home owner must install an expensive panel and do load relocation before connecting an external power source as a backup via the NFT.

Bidirectional charging, also known as two-way charging, is a technology that allows an EV or the like to both receive and deliver energy. This means that electricity can flow from the grid to charge the vehicle and, conversely, the vehicle can send electricity back to the grid or to other devices, such as a home or office. This capability transforms the EV into a power source, enabling it to support energy needs beyond just transportation. As described above, conventional EV charging requires installing an NFT in the electrical panel to isolate the home from the grid and provide a neutral for enabling bidirectional charging.

The conventional techniques have been considered satisfactory for their intended purpose. However, there is an ever-present need for improved systems and methods for creating a neutral connection in an electrical system and providing improved bidirectional charging.

### SUMMARY

Aspects of the present disclosure provide a pluggable neutral that is easy for installers to wire as well as lighter and less expensive than a conventional neutral forming transformer. The pluggable neutral embodying aspects of the present disclosure is capable of disconnecting from the grid in a grid tie mode without the need for relays, which are commonplace when using a transformer-based neutral forming transformer for this purpose. Moreover, the pluggable neutral may take the form of a high-frequency AC-to-AC converter topology permitting both neutral point balancing and controlled power flow in an alternating current (AC) electrical system.

In an aspect, an NFT comprises first, second, and neutral electrical lines. In addition, the NFT comprises an AC-to-AC converter circuit, which has at least four solid state bidirectional switching devices electrically connected in a pair of half bridge configurations. Each half bridge configuration defines an arm and a leg and the first electrical line is electrically connected to the arm of one of the half bridge configurations and the second electrical line is electrically connected to the arm of another one of the half bridge configurations. The neutral line is electrically connected to the leg of each of the half bridge configurations.

In another aspect, a bidirectional electrical charging system comprises electric vehicle supply equipment (EVSE) configured to supply electrical power to an EV for charging its battery. An NFT electrically coupled to the EVSE provides a neutral line electrically coupled to the EVSE when the EVSE is disconnected from the utility grid. The NFT comprises an AC-to-AC converter circuit having at least four solid state bidirectional switching devices electrically connected in a pair of half bridge configurations. A first electrical line is electrically connected to an arm of one of the half bridge configurations and a second electrical line is electrically connected to an arm of another one of the half bridge configurations. The neutral line is electrically connected to a leg of each of the half bridge configurations.

In yet another aspect, a method for bidirectional electrical charging comprises electrically coupling EVSE to an EV, wherein the EVSE is configured to supply electrical power from a utility grid to the EV for charging its battery. The method also includes electrically coupling an NFT to the EVSE to provide a neutral connection when the EVSE is disconnected from the utility grid. The NFT comprises an AC-to-AC converter circuit having at least four solid state bidirectional switching devices electrically connected in a pair of half bridge configurations. The method further comprises electrically connecting a first electrical line of a load to an arm of one of the half bridge configurations, electrically connecting a second electrical line of the load to an arm of another one of the half bridge configurations, and electrically connecting a neutral line of the load to a leg of each of the half bridge configurations, wherein the battery of the EV supplies electrical power to the load.

Other aspects, advantages, and features of the present disclosure will be in part apparent and in part pointed out herein.

### BRIEF DESCRIPTION OF THE DRAWINGS

FIG. 1 illustrates an electrical system connected with various loads and sources, including bidirectional connections and one-way connections according to an embodiment.
FIG. 2 illustrates an enclosure for the system of FIG. 1, showing a meter and an electric vehicle (EV) dispenser connected to an electrical panel according to an embodiment.
FIG. 3 illustrates an EV charging circuit including a pluggable NFT according to an embodiment.
FIG. 4A and FIG. 4B each illustrate an AC-to-AC converter topology for creating a neutral connection in the electrical system of FIG. 1 according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

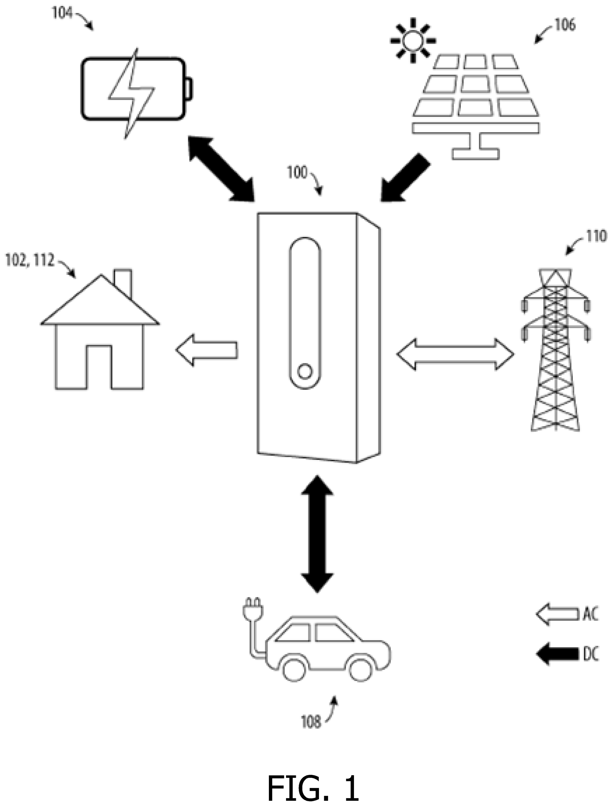

Reference will now be made to the drawings wherein like reference numerals identify similar structural features or aspects of the subject disclosure. For purposes of explanation and illustration, and not limitation, a partial view of an embodiment of a system in accordance with the disclosure is shown in FIG. 1 and is designated generally by reference character 100. The systems and methods described herein can be used to for distribution of power between residential devices, including bidirectional charging such as for electric vehicles, solar panels, storage/backup batteries, and the like, as well as bidirectional energy exchange to and from a utility grid.

The system 100 can be operatively connected to control and protect individual residential circuits 102. The system 100 can connect to a utility grid 110, e.g., to draw alternating current (AC) power from the utility grid to power the AC residential circuits 102. The residential circuits 102 can include e.g., the various circuits distributed throughout a residence for loads 112 such as lighting, outlets, furnace, ovens, ranges, washers/driers, air conditioning, and the like.

Direct current (DC) devices can also connect to the system 100, such as batteries 104 for backup power or storage, DC or AC photovoltaic (PV) panels 106 (e.g., solar panels), and EVs 108. It is also contemplated that system 100 can be operatively connected to other power generating devices, such as a generator (not shown), besides the AC or DC PV devices 106. The system 100 can use the power generated by such generating devices to power the residential circuits 102, charge batteries 104, charge the batteries of EVs 108, and/or supply power to the utility grid 110. As indicated by the large, single head arrows in FIG. 1, the flow of power from the PV panels 106 is unidirectional from the panels to the system 100. Similarly, the flow of energy from the system 100 to the loads in the residential circuits 102 is unidirectional. However, as indicated by the double head arrows in FIG. 1, the energy flow can be bidirectional between the system 100 and each EV 108, the utility grid 110, and the storage/backup battery 104. The system 100 can source power for the loads 112 in the residential circuits 102 from any of the sources 104, 106, 110, and/or 108 as needed. The system 100 can supply power to the utility grid 110 from any of the sources 106, 104, 108 as needed or beneficial. The system 100 can also supply power to charge the batteries 104 and/or the batteries of any connected EVs 108 from any of the applicable connected sources 106, 110. The power flow between the utility grid 110 and the system 100 is AC power, as is the energy supplied from the system 100 to the residential circuits 102. The flow of energy among system 100 and devices 104, 106, 108 is DC power.

A commonly assigned U.S. Patent Application, entitled "Residential Energy Productions, Distribution, and Control", the entire contents of which is incorporated herein by reference, discloses a suitable configuration of system 100 having a photovoltaic (PV) DC-DC converter, a storage/backup battery DC-DC converter, and an electric vehicle (EV) DC-DC converter all built into the system.

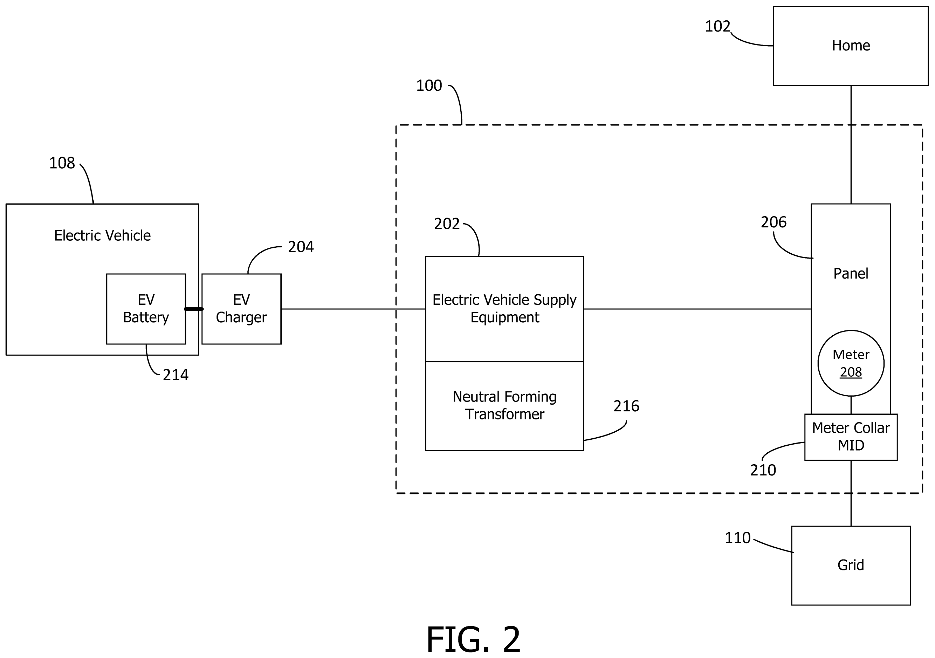

With reference now to FIG. 2, the system 100 can include electric vehicle supply equipment (EVSE) 202. In general, the EVSE 202 provides electric power to EV 108 for recharging the vehicle's batteries. The EVSE 202 may include the electrical conductors, related equipment, software, and communications protocols that deliver energy efficiently and safely to EV 108. FIG. 2 broadly illustrates an EV charger 204 operatively connected EVSE 202. In addition, EVSE 202 is operatively connected to an electrical panel 206 for charging EV 108 and/or powering the various other circuits of FIG. 1 from the EV 108. In the illustrated embodiment, the utility grid 110 supplies power to the panel 206 via a utility meter 208. As will be explained below, the system 100 includes a meter collar 210 that acts as a new interface, or bridge, between the meter 208 and panel 206.

Typically, EV charging is a one-way process. EVSE 202 provides AC power to EV 108 via the EV charger 204. An AC-DC converter (not shown) of the EV 108 converts the AC power to DC power for storage in a battery 214. Bidirectional charging allows the vehicle to convert the stored DC energy back into AC electricity for a variety of uses, including:
- Vehicle to home allows EV 108 to serve as a backup generator during a power outage. A fully charged EV battery 214 holds about 60 kilowatt-hours of electricity on average, which is enough to power a typical home for two days.
- Vehicle to grid charging capability can send electricity back to the utility grid 110 similar to solar power.
- Vehicle to load is the most basic type of bidirectional charging. Typically, an adapter enables using the EV's battery 214 to power camping equipment, power tools, home appliances, or other standalone devices.
- Vehicle to vehicle allows EV 108 to supply power to an EV with a dead battery, similar to giving a "jump" to a gas-powered (internal combustion engine) automobile.

For example, system 100 utilizes the EV battery 214 as a backup, to shift peak usage for improved utility rates, or the like. The utility meter 208 is operatively connected to the electrical panel 206, with a built-in transfer switch (not shown), configured to disconnect electrical panel 206 and all of its circuits from the utility meter 208. This can allow for the electrical panel 206 to supply power to the circuits 102 of the residence from battery storage or generation sources such as solar panels, with the electrical panel 206 isolated or islanded from the utility grid 110.

Referring further to FIG. 2, the illustrated EV charging circuit also includes a pluggable neutral 216, or neutral forming transformer, according to an embodiment. In an embodiment, the neutral 216 is pluggable into the EVSE 202 to provide a neutral, which is not normally provided by the EVSE 202. Instead, grid 110 normally provides the neutral. Providing the neutral in this manner with pluggable neutral 216 permits the EVSE 202 or other circuitry to be used off grid. As described above, isolating the home from the grid 110 is required to form a backup. The conventional setup requires installation of an NFT in panel 206, which is expensive, as well as load relocation to enable backup forming capabilities of the EV 108. Advantageously, aspects of the present disclosure focus on making this work with the meter collar 210. The meter collar 210, also referred to as a meter socket adapter, is a device that is inserted between the residential utility electrical meter 208 and a meter socket (not shown) connected to the main panel 206. The meter collar 210 creates a new interface, or bridge, between the meter 208 and panel 206, in effect extending the meter connection further out from the socket. In this manner, meter collar 210 provides safe, cost effective interconnections for residential and some small commercial and industrial applications. The meter collar 210 also simplifies residential solar grid connection, enabling utilities and homeowners to expand access to distributed energy resources. According to an embodiment, meter collar 210 can also be used to isolate a customer's electrical load to enable the provision of backup power. The meter collar 210 includes a relay to isolate the home. In this manner, meter collar 210 provides a microgrid interconnect device (MID) enabling the EV microgrid system to connect and disconnect from the main power grid 110.

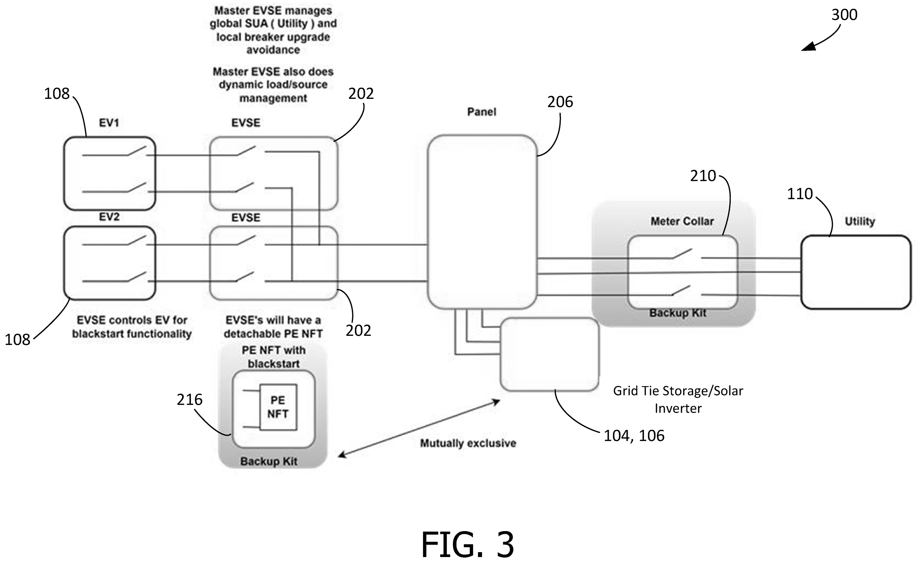

The meter collar 210 cannot accommodate a conventional iron core NFT because it is relatively large. Advantageously, aspects of the present disclosure employ the pluggable neutral 216, which is relatively compact, modular, and/or detachable, and is easy to wire. Preferably, pluggable neutral 216 is comprised of power electronics to achieve a compact size. In operation, meter collar 210 permits panel 206 and, thus, EVSE 202 to be selectively disconnected from utility grid 110 via the meter 208. When disconnected, the pluggable neutral 216 provides a neutral connection for EVSE 202. Although illustrated separately from the other elements of FIG. 3, it is to be understood that EVSE 202 may be housed within panel 206 and may or may not include other components depending on where one delineates the boundaries of EVSE 202. Commonly assigned U.S. Patent No. 12,005,801, the entire disclosure of which is incorporated herein by reference, discloses additional aspects of an EVSE charging station.

An example EV charging circuit 300 of FIG. 3 permits AC bidirectional charging. In this example, EV 108 is capable of discharging 240V using its onboard charger and is therefore a suitable replacement for an ESS. Inasmuch as the typical EV 108 is not capable of producing 120V power, there is a need for providing neutral forming capabilities with a transformer outside the vehicle. In order to facilitate installation and provide an economical neutral connection, the EV charging circuit 300 employs a product, namely, pluggable neutral 216, that plugs in as a neutral directly to the EVSE 202.

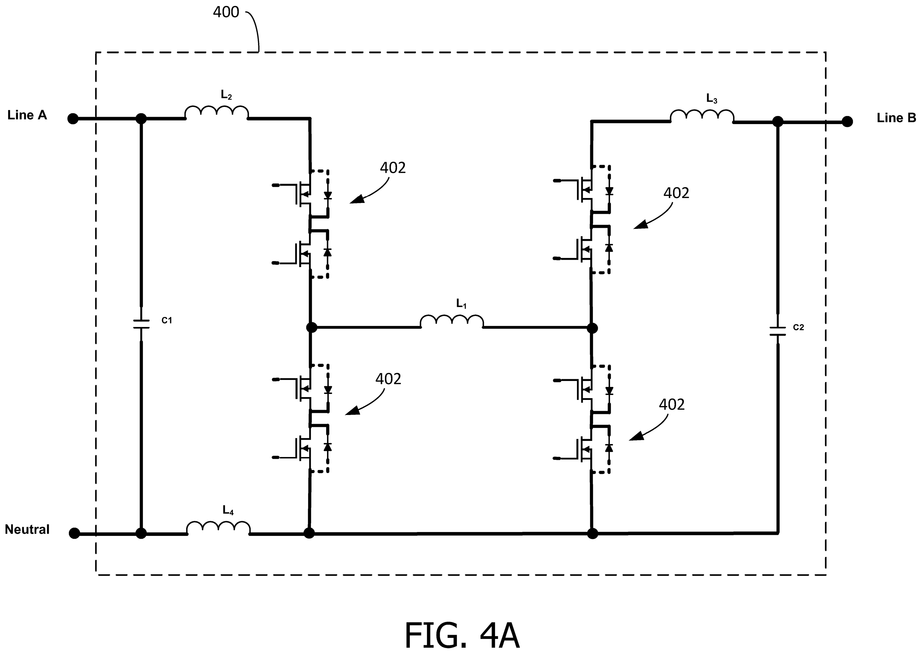

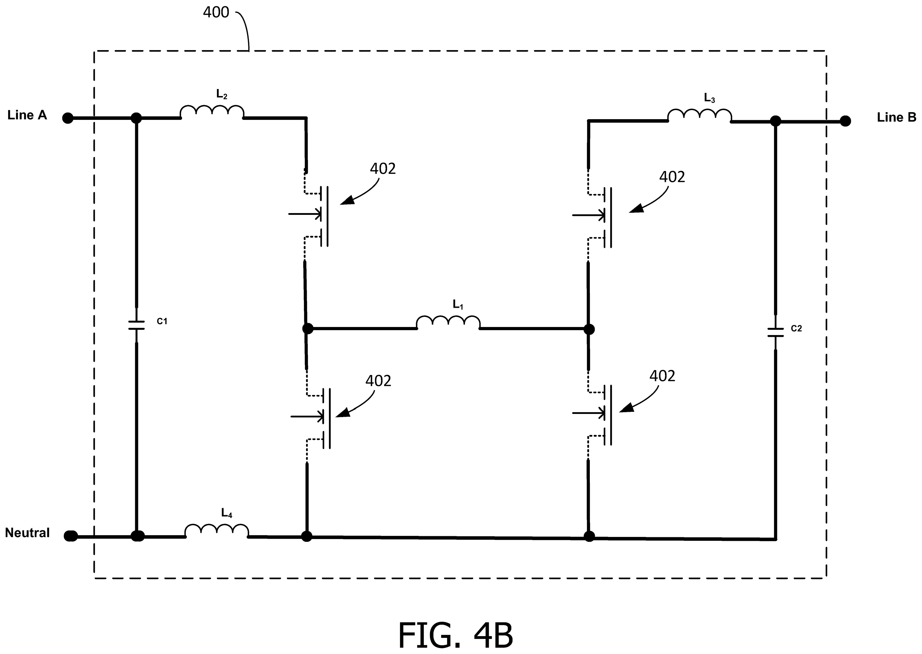

Example use cases include meter collar 210 and pluggable neutral 216 and may additionally include one or more current transformers for measuring current from an external source, such as photovoltaic (solar) panel. Providing a neutral in this manner permits bidirectional charging not only for EVs 108 but also solar, back-up batteries, and other DC power sources. In one embodiment, the pluggable neutral 216 comprises a solid state NFT such as described below with reference to FIGS. 4A and 4B but it is to be understood that other NFTs could be connected to EVSE 202 within the scope of the present disclosure.

FIG. 4A and FIG. 4B each illustrate an AC-to-AC converter topology for creating a neutral connection in the electrical system of FIG. 1 according to an embodiment.

A novel high-frequency AC-to-AC converter topology embodying aspects of the present disclosure is shown in FIG. 4A. An AC-to-AC converter 400 is designed for both neutral point balancing and controlled power flow in an AC electrical system, such as the EV charging circuit 300. The architecture of AC-to-AC converter 400 employs high-frequency switching devices 402 arranged in a bidirectional configuration as shown, which enables direct AC conversion without the need for bulky line-frequency transformers. Moreover, this approach allows precise dynamic control of current injection at the neutral point, effectively mitigating voltage imbalance caused by asymmetrical loading and forming a neutral point. The disclosed topology also supports efficient bidirectional power flow control, making it suitable for grid-interactive applications, inverter-based systems, and high-performance load management. The use of high-frequency switching devices 402 significantly enhances power density, reduces size and weight, and improves transient response compared to conventional AC-to-AC converters.

In the illustrated embodiments, the AC-to-AC converter circuit 400 comprises at least four solid state bidirectional switching devices 402 electrically connected in two half bridge configurations.. As shown, the converter circuit 400 comprises two half bridges connected to each other using an inductor to generate, or create, a controlled neutral point. Each half bridge configuration defines an arm and a leg and at least one of the bidirectional switching devices 402 is located in each arm and each leg. A first electrical line, labeled Line A, may be electrically connected to the arm of one half bridge configuration and a second electrical line, labeled Line B, is electrically connected to the arm of the other half bridge configuration. A neutral line is electrically connected to both legs of the half bridge configurations such that the neutral line comprises a bottom rail of the AC-to-AC converter 400.

Advantageously, the AC-to-AC converter topology of FIGS. 4A and 4B is scalable and adaptable for residential, commercial, and industrial power systems. The switching devices 402 of this topology can be implemented using back-to-back switches for isolation as shown in FIG. 4A. For example, switching devices 402 are illustrated as two back-to-back field-effect transistors (FET) switches in series, such as N-channel MOSFET switches having a common drain. In another embodiment, switching devices 402 can be implemented using Bi-Directional (Bi-Di) switches for isolation as shown in FIG. 4B. In yet another embodiment, high-frequency transformers (not shown) (e.g., frequencies up to 500 kHz) may be used in the converter circuitry for isolation.

The AC-to-AC converter 400 comprises a solid state power electronics NFT of the present disclosure that is small and can be plugged into EVSE 202, unlike a conventional iron core or solid core transformer. In this manner, the AC-to-AC converter 400 allows a neutral point creation from a single phase AC voltage and, thus, allows creation of a split phase 120/240V power supply. In this manner, AC-to-AC converter 400 is configured for connection to split phase sources, loads and unbalanced loads and benefits from a smaller and lighter footprint and reduced product cost and size of EVSE 202 supporting split phase and unbalanced single phase loads connected to two different phases of the split phase. The topologies of FIGS. 4A and 4B also provide DC-to-AC-to-DC and can be used for NFT, EVSE, and AC-to-AC charger applications.

In an embodiment, system 100 also includes a MID (not shown in FIG. 1). By controlling the MID, the system 100 can be selectively connected and disconnect from the utility grid to run as an island, e.g. for power outages or when there is self-sufficient power generated in the residence, for shifting peak usage to off peak hours using the PV devices 106, batteries 104, and/or EV 108, or the like.

The methods and systems of the present disclosure, as described above and shown in the drawings, provide for control of power production and distribution between residential devices, including bidirectional charging such as for electric vehicles, storage/backup batteries, and the like, as well as bidirectional energy exchange to and from a utility grid. While the apparatus and methods of the subject disclosure have been shown and described with reference to preferred embodiments, those skilled in the art will readily appreciate that changes and/or modifications may be made thereto without departing from the scope of the subject disclosure.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the disclosure are operational with other special purpose computing system environments or configurations. The computing system environment is not intended to suggest any limitation as to the scope of use or functionality of any aspect of the disclosure. Moreover, the computing system environment should not be interpreted as having any dependency or requirement relating to any one or combination of components illustrated in the example operating environment. Examples of computing systems, environments, and/or configurations that may be suitable for use with aspects of the disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored in memory, i.e., one or more tangible, non-transitory storage media, and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the disclosure.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the disclosure.

When introducing elements of the disclosure or embodiments thereof, the articles "a", "an" "the" and "said" are intended to mean that there are one or more of the elements. The terms "comprising", "including" and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the disclosure, and describes several embodiments, adaptations, variations, alternatives and uses of the aspects of the disclosure, including what is presently believed to be the best mode of carrying out the aspects of the disclosure. Additionally, it is to be understood that the aspects of the disclosure are not limited in its application to the details of construction and the arrangement of components set forth in the following description or illustrated in the drawings. The aspects of the disclosure are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the disclosure defined in the appended claims. As various changes could be made in the above constructions and methods without departing from the scope of the disclosure, it is intended that all matter contained in the above description and shown in the accompanying drawings shall be interpreted as illustrative and not in a limiting sense.

In view of the above, it will be seen that at least some embodiments help to address at least some concerns discussed herein and that at least some embodiments help achieve and attain one or more advantageous results.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

Further aspects of the invention are provided by the subject matter of the following clauses:
Clause 1. A neutral forming transformer comprising: a first electrical line; a second electrical line; a neutral line; and an AC-to-AC converter circuit, the AC-to-AC converter circuit comprising at least four solid state bidirectional switching devices electrically connected in a pair of half bridge configurations, each half bridge configuration defining an arm and a leg, wherein the first electrical line is electrically connected to the arm of one of the half bridge configurations and the second electrical line is electrically connected to the arm of another one of the half bridge configurations, and wherein the neutral line is electrically connected to the leg of each of the half bridge configurations.
Clause 2. The neutral forming transformer of Clause 1, wherein the bidirectional switching devices comprise back-to-back switches electrically connected in series to each other.
Clause 3. The neutral forming transformer of Clause 2, wherein the back-to-back switches electrically connected in series to each other comprise N-channel MOSFETs having a common drain.
Clause 4. The neutral forming transformer of any of Clauses 1 to 3, wherein the neutral line comprises a bottom rail of the AC-to-AC converter circuit.
Clause 5. The neutral forming transformer of any of Clauses 1 to 4, wherein at least one of the bidirectional switching devices is located in the arm and in the leg of each half bridge configuration.
Clause 6. The neutral forming transformer of any of Clauses 1 to 5, wherein the AC-to-AC converter circuit is configured for providing a neutral line electrically coupled to at least one of electric vehicle supply equipment (EVSE), a backup storage inverter, or a photovoltaic (PV) panel inverter.
Clause 7. A bidirectional electrical charging system comprising: electric vehicle supply equipment (EVSE) configured to supply electrical power to an electric vehicle (EV) for charging a battery thereof when the EVSE is electrically coupled to the EV; and a neutral forming transformer electrically coupled to the EVSE for providing a neutral line electrically coupled to the EVSE when the EVSE is disconnected from the a utility grid, wherein the neutral forming transformer comprises an AC-to-AC converter circuit, the AC-to-AC converter circuit comprising at least four solid state bidirectional switching devices electrically connected in a pair of half bridge configurations, each half bridge configuration defining an arm and a leg, wherein a first electrical line is electrically connected to the arm of one of the half bridge configurations and a second electrical line is electrically connected to the arm of another one of the half bridge configurations, and wherein the neutral line is electrically connected to the leg of each of the half bridge configurations.
Clause 8. The bidirectional electrical charging system of Clause 7, further comprising a microgrid interconnect device (MID) configured to selectively connect and disconnect the EVSE from a utility grid, the utility grid supplying alternating current (AC) electrical power to the EVSE when the EVSE is connected to the utility grid via the MID.
Clause 9. The bidirectional electrical charging system of Clause 8, wherein the MID comprises a meter collar.
Clause 10. The bidirectional electrical charging system of Clause 9, wherein the EVSE is electrically coupled to an electrical panel, the panel comprising a meter socket configured to receive a utility meter for electrically connecting the panel to the utility grid and for measuring the electrical power supplied to the panel by the utility grid, and wherein the meter collar is installed between the meter socket and the meter.
Clause 11. The bidirectional electrical charging system of Clause 10, wherein a load is connected to the panel and battery of the EV supplies electrical power to the load via the EVSE and the panel.
Clause 12. The bidirectional electrical charging system of any of Clauses 7 to 11, wherein the bidirectional switching devices comprise back-to-back switches electrically connected in series to each other.
Clause 13. The bidirectional electrical charging system of Clause 12, wherein the back-to-back switches electrically connected in series to each other comprise N-channel MOSFETs having a common drain.
Clause 14. The bidirectional electrical charging system of any of Clauses 7 to 14, wherein the neutral line comprises a bottom rail of the AC-to-AC converter circuit.
Clause 15. A method for bidirectional electrical charging comprising: electrically coupling electric vehicle supply equipment (EVSE) to an electric vehicle (EV), wherein the EVSE is configured to supply electrical power from a utility grid to the EV for charging a battery thereof when the EVSE is electrically coupled to the EV; and electrically coupling a neutral forming transformer to the EVSE to provide a neutral connection when the EVSE is disconnected from the utility grid, wherein the neutral forming transformer comprises an AC-to-AC converter circuit having at least four solid state bidirectional switching devices electrically connected in a pair of half bridge configurations, and wherein each half bridge configuration defines an arm and a leg, electrically connecting a first electrical line of a load to the arm of one of the half bridge configurations; electrically connecting a second electrical line of the load to the arm of another one of the half bridge configurations; and electrically connecting a neutral line of the load to the leg of each of the half bridge configurations, wherein the battery of the EV supplies electrical power to the load.
Clause 16. The method of Clause 15, further comprising electrically coupling the EVSE to an electrical panel, wherein the panel comprises a meter socket configured to receive a utility meter for electrically connecting the panel to the utility grid and for measuring the electrical power supplied to the panel by the utility grid.
Clause 17. The method of Clause 16, wherein the MID comprises a meter collar, and further comprising installing the meter collar between the meter socket and the meter.
Clause 18. The method of Clause 16 or Clause 17, further comprising electrically connecting the load to the panel and supplying electrical power to the load from the battery of the EV via the EVSE and the panel.
Clause 19. The method of any of Clauses 15 to 18, wherein at least one of the bidirectional switching devices is located in the arm and in the leg of each half bridge configuration.
Clause 20. The method of any of Clauses 15 to 19, wherein the neutral connection provided by the neutral forming transformer comprises a bottom rail of the AC-to-AC converter circuit.

## Claims

1. A neutral forming transformer (216), the neutral forming transformer (216) comprising:
a first electrical line;
a second electrical line;
a neutral line; and
an alternating current-to-alternating current, AC-to-AC, converter circuit (400), the AC-to-AC converter circuit (400) comprising at least four solid state bidirectional switching devices (402) electrically connected in a pair of half bridge configurations, each half bridge configuration defining an arm and a leg,
wherein the first electrical line is electrically connected to the arm of one of the half bridge configurations and the second electrical line is electrically connected to the arm of another one of the half bridge configurations, and
wherein the neutral line is electrically connected to the leg of each of the half bridge configurations.

2. The neutral forming transformer (216) of claim 1, wherein the bidirectional switching devices (402) comprise back-to-back switches electrically connected in series to each other.

3. The neutral forming transformer (216) of claim 2, wherein the back-to-back switches electrically connected in series to each other comprise N-channel MOSFETs having a common drain.

4. The neutral forming transformer (216) of any of claims 1 to 3, wherein the neutral line comprises a bottom rail of the AC-to-AC converter circuit (400).

5. The neutral forming transformer (216) of any of claims 1 to 4, wherein at least one of the bidirectional switching devices (402) is located in the arm and in the leg of each half bridge configuration.

6. The neutral forming transformer (216) of any of claims 1 to 5, wherein the AC-to-AC converter circuit (400) is configured for providing a neutral line electrically coupled to at least one of electric vehicle supply equipment, EVSE, (202), a backup storage inverter, or a photovoltaic, PV, panel inverter.

7. A bidirectional electrical charging system (100), the bidirectional electrical charging system (100) comprising:
electric vehicle supply equipment, EVSE, (202) configured to supply electrical power to an electric vehicle, EV, (108) for charging a battery (214) thereof when the EVSE (202) is electrically coupled to the EV (108); and
a neutral forming transformer (216) electrically coupled to the EVSE (202) for providing a neutral line electrically coupled to the EVSE (202) when the EVSE (202) is disconnected from a utility grid (110), wherein the neutral forming transformer (216) comprises an alternating current-to-alternating current, AC-to-AC, converter circuit (400), the AC-to-AC converter circuit (400) comprising at least four solid state bidirectional switching devices (402) electrically connected in a pair of half bridge configurations, each half bridge configuration defining an arm and a leg,
wherein a first electrical line is electrically connected to the arm of one of the half bridge configurations and a second electrical line is electrically connected to the arm of another one of the half bridge configurations, and
wherein the neutral line is electrically connected to the leg of each of the half bridge configurations.

8. The bidirectional electrical charging system (100) of claim 7, comprising a microgrid interconnect device, MID, (210) configured to selectively connect and disconnect the EVSE (202) from a utility grid (110), the utility grid (110) supplying AC electrical power to the EVSE (202) when the EVSE (202) is connected to the utility grid (110) via the MID (210).

9. The bidirectional electrical charging system (100) of claim 8, wherein the MID (210) comprises a meter collar (210).

10. The bidirectional electrical charging system (100) of claim 9, wherein the EVSE (202) is electrically coupled to an electrical panel (206), the panel (206) comprising a meter socket configured to receive a utility meter (208) for electrically connecting the panel (206) to the utility grid (110) and for measuring the electrical power supplied to the panel (206) by the utility grid (110), and wherein the meter collar (210) is installed between the meter socket and the meter (208).

11. The bidirectional electrical charging system (100) of claim 10, wherein a load is connected to the panel (206) and battery (214) of the EV (108) supplies electrical power to the load via the EVSE (202) and the panel (206).

12. The bidirectional electrical charging system (100) of any of claims 7 to 11, wherein the bidirectional switching devices (402) comprise back-to-back switches electrically connected in series to each other.

13. The bidirectional electrical charging system (100) of claim 12, wherein the back-to-back switches electrically connected in series to each other comprise N-channel MOSFETs having a common drain.

14. The bidirectional electrical charging system (100) of any of claims 7 to 14, wherein the neutral line comprises a bottom rail of the AC-to-AC converter circuit (400).

15. A method for bidirectional electrical charging comprising:
electrically coupling electric vehicle supply equipment, EVSE, (202) to an electric vehicle, EV, (108), wherein the EVSE (202) is configured to supply electrical power from a utility grid (110) to the EV (108) for charging a battery (214) thereof when the EVSE (202) is electrically coupled to the EV (108); and
electrically coupling a neutral forming transformer (216) to the EVSE (202) to provide a neutral connection when the EVSE (202) is disconnected from the utility grid (110), wherein the neutral forming transformer (216) comprises an alternating current-to-alternating current, AC-to-AC, converter circuit (400) having at least four solid state bidirectional switching devices (402) electrically connected in a pair of half bridge configurations, and wherein each half bridge configuration defines an arm and a leg,
electrically connecting a first electrical line of a load to the arm of one of the half bridge configurations;
electrically connecting a second electrical line of the load to the arm of another one of the half bridge configurations; and
electrically connecting a neutral line of the load to the leg of each of the half bridge configurations, wherein the battery (214) of the EV (108) supplies electrical power to the load.
